# FASCICULE DE BREVET EUROPEEN

(11) **EP 0 725 361 B1**
(45) Date de publication et mention de la délivrance du brevet: **31.07.2002**
(21) Numéro de dépôt: 96400087.1
(22) Date de dépôt: 12.01.1996
(51) Int. Cl.: G06K 11/18

(54) **Dispositif de commande utilisable pour la désignation et le déplacement d'un objet sur un écran**
Steuerungsvorrichtung geeignet für den Hinweis und die Bewegung eines Objektes auf einem Bildschirm
Control device suitable for pointing and moving of an object on a screen

(30) Priorité: 06.02.1995 FR 9501424
(43) Date de publication de la demande: 07.08.1996
(73) Titulaire: THALES AVIONICS S.A., 78141 Vélizy Villacoublay Cédex (FR)
(72) Inventeur: Oder, Engin, F-78960 Voisins le Bretonneux (FR)
(74) Mandataire: de Saint-Palais, Arnaud Marie

(56) Documents cités:
- DE-C- 3 913 648
- NL-A- 9 300 067

## Description

La présente invention concerne un dispositif de commande utilisable pour la désignation et le déplacement d'un objet sur un écran.

D'une façon générale, on sait que ce type de commande est couramment effectué au moyen d'un ensemble de quatre touches ou analogues alignées deux par deux sur deux axes respectifs perpendiculaires (touches haute, basse, droite, gauche).

Il s'avère que cette solution présente un certain nombre d'inconvénients.

Tout d'abord, elle ne permet pas d'effectuer des déplacements en diagonale. De ce fait, dans la plupart des cas, l'opérateur est obligé d'effectuer une suite de déplacements parallèles aux susdits axes avant d'atteindre son objectif.

Par ailleurs, cette solution ne permet pas à l'opérateur d'effectuer un contrôle efficace et ergonomique de la vitesse de déplacement.

En effet, dans les solutions classiques, la vitesse de déplacement croît en fonction de la durée de sollicitation de la touche.

Ainsi, pour effectuer des déplacements lents, l'opérateur est obligé d'effectuer une succession d'appui de courte durée sur la touche, ce qui n'est pas pratique.

Au contraire, pour obtenir un déplacement rapide, il devra maintenir continûment sa pression sur la touche. Ainsi, contrairement à toute logique, au début du déplacement, alors qu'aucune précision n'est exigée, le déplacement s'effectue lentement. Par contre, plus on se rapproche de l'objectif et, en conséquence, plus la précision du déplacement doit être importante, plus la vitesse de déplacement s'accroît.

C'est la raison pour laquelle il est pratiquement impossible d'atteindre par une seule pression sur une touche, un objectif exigeant un déplacement important (multimouvement).

Ainsi, outre sa mauvaise ergonomie, cette solution présente l'inconvénient de ne pas permettre une optimisation du temps d'acquisition de l'objectif.

La solution qui consiste à utiliser une souris à la place des touches est ergonomiquement bien meilleure. Toutefois, elle ne peut pas être utilisée dans de nombreuses applications, notamment du fait que la souris constitue un objet dissocié du boîtier de l'appareil auquel elle se trouve rattachée par une liaison souple et que, par ailleurs, elle exige une place importante (surface de roulement) pour son utilisation.

D'autres solutions telles que le "track ball" manquent de précision et ne permettent pas un contrôle efficace et ergonomique de la vitesse de déplacement.

Par ailleurs, il est difficile d'utiliser les dispositifs de ce genre en milieu perturbé (vibrations) ainsi que de les rendre étanches.

L'invention a donc plus particulièrement pour but la réalisation d'un dispositif de commande qui ne présente pas les inconvénients précités et qui soit, en conséquence, étanche, peu volumineux, intégrable dans un panneau de commande d'un appareil à la façon d'une touche, d'une manipulation aisée et ergonomique et qui permette d'assurer un contrôle cohérent de la vitesse de déplacement de manière à réduire les temps d'acquisition des objectifs en accroissant la précision de la commande.

Pour parvenir à ces résultats, elle propose un dispositif de commande comprenant une pièce d'actionnement guidée par des moyens de guidage de manière à pouvoir se déplacer omnidirectionnellement dans un plan, un ensemble de détection comprenant quatre moyens de détection prenant appui sur ladite pièce en deux couples d'emplacements opposés situés sur deux axes perpendiculaires, et un circuit de traitement apte à mesurer les efforts exercés dans ledit plan sur les moyens de détection par la pièce d'actionnement et qui commande l'orientation, le sens et la vitesse du déplacement en fonction de l'amplitude des efforts détectés par les moyens de détection.

L'invention ne se limite pas à des moyens de détection particuliers : Ces moyens de détection peuvent être de types capacitifs, résistifs, magnétiques, optiques, etc...

Ces moyens de détection pourront également consister en des jauges de contrainte. Dans ce cas, la pièce d'actionnement pourra présenter, dans le susdit plan, une forme circulaire inscrite dans un carré formé par quatre lames flexibles portant chacune une jauge de contrainte.

Un interrupteur, voire même une jauge de contrainte, pourra être également prévu pour détecter des efforts exercés sur la pièce d'actionnement, perpendiculairement au susdit plan.

Grâce à ces dispositions, on obtient un dispositif de commande très compact, dont les dimensions peuvent être inférieures à celles des quatre touches de direction classiques, qui présente cependant une meilleure ergonomie et qui permet d'obtenir une meilleure précision de la commande.

Un mode d'exécution du dispositif selon l'invention sera décrit ci-après, à titre d'exemple non limitatif, avec référence aux dessins annexés dans lesquels :
La figure 1 est une vue de face du dispositif de commande ;
La figure 2 est une coupe selon AA de la figure 1 ;
La figure 3 est une coupe selon BB de la figure 2 ;
La figure 4 est un schéma synoptique d'un circuit électronique de traitement associé au dispositif de commande ;
La figure 5 est un diagramme illustrant la loi de commande d'un actionneur (vitesse de déplacement = f (force dans l'axe)).

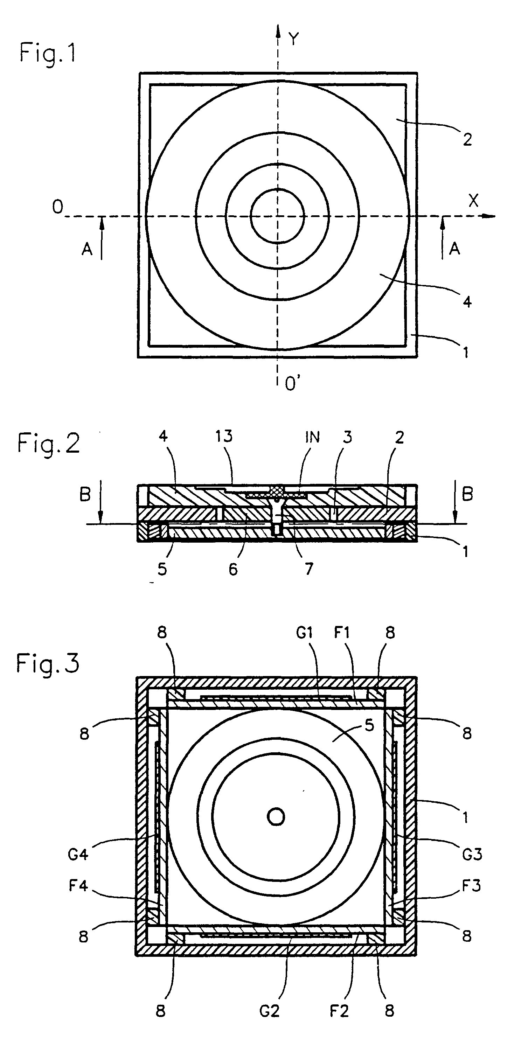

Tel que représenté sur les figures 1 à 3, le dispositif de commande comprend une structure fixe se présentant sous la forme d'un cadre 1 de forme carrée sur la face supérieure duquel est fixée une paroi 2, également de forme carrée, comprenant un orifice central 3 de forme circulaire.

Sur la paroi 2 est montée coulissante une touche 4, de forme circulaire, reliée à un disque coaxial 5 contenu à l'intérieur du cadre 1, par l'intermédiaire d'une entretoise circulaire coaxiale 6 passant au travers de l'orifice 3, la solidarisation du disque 5, de l'entretoise 6 et de la touche 4 est assurée par une vis coaxiale 7. Les diamètres de la touche 4 et du disque 5 sont supérieurs à celui de l'orifice 3, lequel est plus grand que celui de l'entretoise 6. La largeur de l'espace libre compris entre la touche 4 et le disque 5 est prévue légèrement supérieure à l'épaisseur de la paroi 2.

L'ensemble mobile constitué par la touche 4, le disque 5 et l'entretoise 6 est maintenu centré par rapport au cadre 1 grâce à quatre lames flexibles parallèles deux à deux F₁ - F₂, F₃ - F₄ et disposées tangentiellement contre le disque 5. Ces lames définissent un carré dans lequel le disque 5 se trouve inscrit.

En fait, chacune de ces lames flexibles F₁ à F₄ est fixée à une face intérieure du cadre 1 par l'intermédiaire de deux cales d'espacement 8.

Sur chacune de ces lames flexibles F₁ à F₄ est fixée, par exemple par collage, une jauge de contrainte G₁ à G₄.

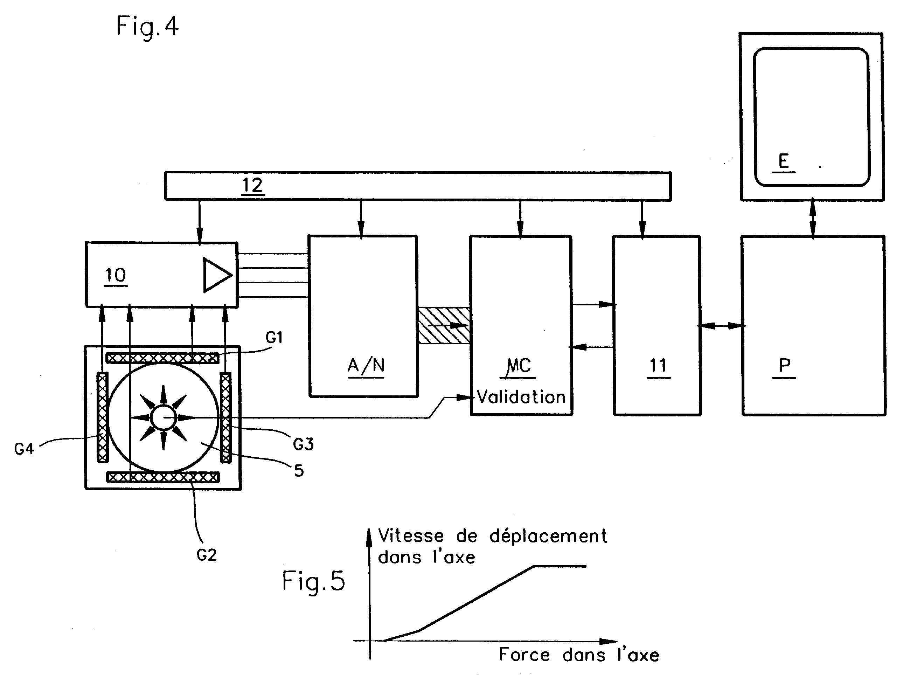

Le circuit de traitement associé aux jauges de contrainte peut comprendre, par exemple de la façon représentée sur la figure 4, un conditionneur 10 qui reçoit les informations délivrées par les jauges de contrainte G₁ à G₄ et qui les transmet à un microcontrôleur µC par l'intermédiaire d'un convertisseur analogique/numérique A/N. Le microcontrôleur peut être, quant à lui, connecté, par exemple grâce à un interface série de communication 11 de type RS232, au processeur P associé à l'écran E dont on désire gérer les déplacements d'un objet (voire même le déplacement de l'ensemble de l'image). Bien entendu, les circuits électroniques du conditionneur 10, du convertisseur A/N, du microcontrôleur µC et de l'interface 11 sont alimentés par un circuit d'alimentation stabilisée 12.

Le conditionneur 10 de signaux des jauges de contrainte G₁ à G₄ est conçu de manière à transformer les variations de la résistance des jauges G₁ à G₄ en signaux électriques analogiques. Il peut notamment comprendre quatre ponts de Wheatstone comprenant chacun une branche constituée par une jauge de contrainte correspondante.

Le convertisseur analogique/numérique A/N échantillonne et convertit les signaux analogiques délivrés par le conditionneur 10 en signaux numériques utilisables par le microcontrôleur.

Le microcontrôleur µC reçoit, d'une part, les signaux échantillonnés et numérisés provenant du convertisseur A/N et, d'autre part, les commandes de configuration des lois de commande.

Il élabore des codes à partir des lois de commande et des signaux acquis depuis les jauges de contrainte, puis les renvoie via l'interface au processeur P qui gère l'écran E.

L'interface série 11, de type RS232C permet une communication bidirectionnelle duplexée avec le processeur P.

Sur le plan mécanique, les efforts exercés sur la touche 4 dans un plan parallèle au plan B-B tendent à déplacer le disque 5 en provoquant une déformation des lames élastiques F₁ à F₄ et, par conséquent, des jauges de contrainte G₁ à G₄. Les composantes de ces efforts sur les axes respectifs OX et O'Y sont donc détectées par la variation de la résistance des jauges. Quand aucune force n'est appliquée à la touche 4, les lames flexibles F₁ à F₄ associées aux jauges ramènent le disque 5 en position de repos (centrée dans le cadre).

Les lois de commande utilisées par le microcontrôleur µC servent à convertir la valeur des signaux des jauges G₁ à G₄ en codes de commande de déplacements. Ces lois, qui se présentent sous forme de tables de conversion, sont modifiables dynamiquement par le microcontrôleur µC au moyen du protocole de communication avec le processeur P à travers la liaison série 11 grâce à des commandes de configuration reconnues par le microcontrôleur µC.

La figure 5 montre un exemple de loi selon laquelle, dans un premier temps, la vitesse de déplacement s'accroît de façon sensiblement linéaire en fonction de l'effort appliqué à la touche 4 dans l'axe sensible de la jauge de contrainte G₁ à G₄ (perpendiculaire à la jauge et situé dans le plan de déplacement du disque 5) puis se maintient ensuite à une valeur constante quel que soit l'effort appliqué à la jauge G₁ à G₄.

En fonction de ces lois de commande, le microcontrôleur µC génère les codes de déplacement à destination du processeur P.

A cet effet, deux modes de fonctionnement sont envisageables, à savoir : l'incrémentation temporelle et le codage en amplitude des impulsions.

Selon le mode d'incrémentation temporelle, la force appliquée est traduite en une suite de codes de direction dont la fréquence de répétition est proportionnelle à la composante de la force dans la direction correspondante.

Dans ce cas, le flux de conversion est important au détriment du flux de commande. La résolution, contrairement à la vitesse, est peu importante.

En mode de codage en amplitude des impulsions, les codes envoyés contiennent à la fois les informations de direction et l'amplitude du déplacement.

Par exemple, le codage sur un octet peut être le suivant :
AXXXBYYY
- A =: 1 signifie un déplacement vers la gauche de XXX points
- A =: 0 signifie un déplacement vers la droite de XXX points
- B =: 1 signifie un déplacement vers le bas de YYY points
- B =: 0 signifie un déplacement vers le haut de YYY points

Dans ce mode, la cadence d'envoi des codes est constante mais modifiable par le processeur P.

Dans sa fonction de base, le dispositif précédemment décrit peut réaliser les fonctions des souris utilisées sur les micro-ordinateurs standard. La différence consiste en ce qu'au lieu de déplacer la souris, l'opérateur n'a à effectuer qu'une pression du doigt sur la touche 4 dans le sens où il souhaite effectuer son déplacement. Le logiciel résidant dans le processeur peut donc effectuer le contrôle du dispositif d'une façon compatible avec les pilotes standard de souris. Ceci permet, d'une part, l'utilisation du dispositif avec des logiciels standard et, d'autre part, de garantir la compatibilité des développements logiciels.

Le dispositif précédemment décrit peut en outre comprendre un interrupteur IN de confirmation placé de telle façon que son activation ne puisse se faire que par une pression exercée sur la touche 4 selon un axe perpendiculaire au disque 5.

Dans l'exemple représenté sur les dessins, un tel interrupteur IN est disposé au centre de la touche 4 et est actionnable au travers d'une membrane déformable 13 qui s'étend au niveau de la face frontale de la touche 4.

Cet interrupteur IN est connecté au microcontrôleur µC qui, lors d'une activation, détecte le contact par le biais d'une de ses entrées booléennes.

Ceci provoque l'envoi d'un code de confirmation par le microcontrôleur µC, uniquement si la touche de commande 4 n'est pas sollicitée latéralement (parallèlement au disque).

Cette fonction peut aussi être réalisée par une jauge (cinquième jauge) de contrainte qui détecte les efforts verticaux perpendiculaires au plan et un détecteur de seuil d'effort réglable par programmation au même titre que les lois de commandes qui convertit la pression verticale exercée sur la touche en une impulsion de validation.

## Revendications

1. Dispositif de commande utilisable pour la désignation et le déplacement d'un objet sur un écran, ce dispositif comprenant une pièce d'actionnement mobile (5), un ensemble de détection comprenant quatre moyens de détection (G₁ à G₄) prenant appui sur ladite pièce (5) en deux couples d'emplacements opposés situés sur deux axes perpendiculaires (OX, O'Y), et un circuit de traitement (10, A/N, µC) apte à mesurer les efforts exercés sur les moyens de détection (G₁ à G₄) par la pièce d'actionnement (5) et qui commande l'orientation, le sens et la vitesse du déplacement en fonction de l'amplitude des efforts détectés par les moyens de détection (G₁ à G₄),
**caractérisé en ce que** la pièce d'actionnement (5) est guidée par des moyens de guidage de manière à pouvoir se déplacer omnidirectionnellement en translation dans un plan sous l'effet d'efforts exercés parallèlement audit plan, et **en ce que** les moyens de détection et le circuit de détection sont conçus de manière à mesurer les efforts exercés dans ledit plan sur les moyens de détection (G₁ à G₄) par la pièce d'actionnement (5).

2. Dispositif de commande selon la revendication 1,
**caractérisé en ce que** les moyens de détection consistent en des jauges de contrainte (G₁ à G₄).

3. Dispositif de commande selon la revendication 2,
**caractérisé en ce que** la susdite pièce d'actionnement présente, dans le susdit plan, une forme circulaire inscrite dans un carré formé par quatre lames flexibles (F₁ à F₄) portant chacune une jauge de contrainte (G₁ à G₄).

4. Dispositif de commande selon l'une des revendications précédentes,
**caractérisé en ce qu'**il comprend des moyens distincts des jauges de contrainte (G₁ à G₄) permettant de détecter un effort exercé sur la pièce d'actionnement perpendiculairement au susdit plan.

5. Dispositif de commande selon l'une des revendications précédentes,
**caractérisé en ce qu'**il comprend une structure fixe en forme de cadre, dont une face porte une paroi présentant un orifice central circulaire et sur laquelle est montée coulissante une touche reliée à un disque contenu à l'intérieur du cadre, par l'intermédiaire d'une entretoise (6), **en ce que** ce disque vient en appui sur quatre lames flexibles parallèles deux à deux (F₁ à F₄) qui définissent un carré dans lequel le disque est inscrit, et **en ce que** sur chacune de ces lames flexibles (F₁ à F₄) est fixée une jauge de contrainte (G₁ à G₄).

6. Dispositif de commande selon l'une des revendications précédentes,
**caractérisé en ce que** le susdit circuit de traitement comprend un conditionneur qui transforme les variations de résistance des jauges de contrainte (G₁ à G₄) en des signaux analogiques qui, après conversion en un signal numérique par un convertisseur analogique/numérique (A/N), sont appliqués à un microcontrôleur (µC) couplé au processeur (P) qui assure la gestion de l'écran (E).

7. Dispositif de commande selon la revendication 6,
**caractérisé en ce que** le microcontrôleur (µC) élabore des codes de commande de déplacement à partir de lois de commande et des signaux numériques acquis depuis les jauges de contrainte (G₁ à G₄).

8. Dispositif de commande selon la revendication 7,
**caractérisé en ce que** les susdites lois de commande utilisées par le microcontrôleur (µC) sont modifiables dynamiquement au moyen d'un protocole de communication avec le susdit processeur (P).

9. Dispositif de commande selon l'une des revendications précédentes,
**caractérisé en ce que** la force appliquée est traduite en une suite de codes de direction dont la fréquence de répétition est proportionnelle à la composante de la force dans la direction correspondante.

10. Dispositif de commande selon l'une des revendications 1 à 8,
**caractérisé en ce que** les codes envoyés au processeur (P) par le microcontrôleur (µC) contiennent à la fois des informations de direction et d'amplitude du déplacement.

## Patentansprüche

1. Steuerungsvorrichtung für das Markieren und das Verschieben eines Objekts auf einem Bildschirm, wobei diese Vorrichtung ein bewegliches Betätigungsglied (5), einen Sensorteil, der vier Sensorelemente (G₁ bis G₄) beinhaltet, die an zwei Paaren von gegenüberliegenden Stellen auf dem genannten Betätigungsglied (5) aufliegen, wobei diese gegenüberliegenden Stellen auf zwei rechtwinklig zueinander verlaufenden Achsen (OX, O'Y) angeordnet sind; und einen Verarbeitungsschaltkreis (10, A/N, µC), der in der Lage ist, die Kräfte zu messen, die in der genannten Ebene von dem Betätigungsglied (5) auf die Sensorelemente (G₁ bis G₄) ausgeübt werden und der die Bewegungsrichtung und die Bewegungsgeschwindigkeit im Verhältnis zur Amplitude der Kräfte steuert, die von den Sensorelementen (G₁ bis G₄) festgestellt werden,
**dadurch gekennzeichnet, dass** das Betätigungsglied (5) anhand von Führungselementen gerührt wird, um sich omnidirektional in Querrichtung in einer Ebene bewegen zu können, und zwar unter Einwirkung von Kräften, die parallel zu der genannten Ebene ausgeübt werden, und dass die Sensorelemente und der Sensorschaltkreis so konzipiert sind, dass die Kräfte gemessen werden, die von dem Betätigungsglied (5) in der genannten Ebene auf die Sensorelemente (G₁ bis G₄) ausgeübt werden.

2. Steuerungsvorrichtung gemäß Patentanspruch 1,
**dadurch gekennzeichnet, dass** die Sensorelemente aus Dehnungsmessstreifen (G₁ bis G₄) bestehen.

3. Steuerungsvorrichtung gemäß Patentanspruch 2,
**dadurch gekennzeichnet, dass** das oben genannte Betätigungsglied in der genannten Ebene eine runde Form aufweist, die in eine quadratische Form eingebettet ist, bestehend aus vier flexiblen Lamellen (F₁ bis F₄), die jeweils einen Dehnungsmessstreifen (G₁ bis G₄) tragen.

4. Steuerungsvorrichtung gemäß einem der voranstehenden Patentansprüche,
**dadurch gekennzeichnet, dass** sie von den Dehnungsmessstreifen (G₁ bis G₄) getrennte Mittel aufweist, mit denen sich eine Kraft messen lässt, die im rechten Winkel zu der genannten Ebene auf das Betätigungsglied ausgeübt wird.

5. Steuerungsvorrichtung gemäß einem der voranstehenden Patentansprüche,
**dadurch gekennzeichnet, dass** sie eine feststehende Struktur in Form eines Rahmen beinhaltet, dessen eine Seite eine Wandung trägt, die eine runde, zentrale Öffnung aufweist und auf der beweglich eine Taste montiert ist, die anhand eines Abstandshalters (6) mit einer Scheibe verbunden ist, die innerhalb des Rahmens angeordnet ist, und **dadurch gekennzeichnet, dass** diese Scheibe auf vier flexiblen, paarweise parallel angeordneten Lamellen (F₁ bis F₄) aufliegt, die einen Rahmen beschreiben, in den die Scheibe eingebettet ist, und **dadurch gekennzeichnet, dass** auf jeder dieser flexiblen Lamellen (F₁ bis F₄) ein Dehnungsmessstreifen (G₁ bis G₄) befestigt ist.

6. Steuerungsvorrichtung gemäß einem der voranstehenden Patentansprüche,
**dadurch gekennzeichnet, dass** der oben genannte Verarbeitungsschaltkreis ein Verknüpfungsglied beinhaltet, das die Veränderungen des Widerstands der Dehnungsmessstreifen (G₁ bis G₄) in analoge Signale umwandelt, die nach Konvertierung in ein digitales Signal mithilfe eines Analog-Digital-Wandlers (A/N) an einen Mikrocontroller (µC) angelegt werden, der mit einem Prozessor (P) gekoppelt ist, der die Steuerung des Bildschirms (E) gewährleistet.

7. Steuerungsvorrichtung gemäß Patentanspruch 6,
**dadurch gekennzeichnet, dass** der Mikrocontroller (µC) Steuercodes für die Ortsveränderung anhand von Steuerungsgesetzen und anhand der digitalen Signale der Dehnungsmessstreifen (G₁ bis G₄) aufstellt.

8. Steuerungsvorrichtung gemäß Patentanspruch 7,
**dadurch gekennzeichnet, dass** die oben genannten Steuerungsgesetze, die von dem Mikrocontroller (µC) verwendet werden, anhand eines Protokolls über die Kommunikation mit dem oben genannten Prozessor (P) dynamisch verändert werden können.

9. Steuerungsvorrichtung gemäß einem der voranstehenden Patentansprüche,
**dadurch gekennzeichnet, dass** die angewandte Kraft in eine Abfolge von Richtungscodes konvertiert wird, deren Wiederholungsfrequenz sich proportional zu der Kraftkomponente in der entsprechenden Richtung verhält.

10. Steuerungsvorrichtung gemäß einem der Patentansprüche 1 bis 8,
**dadurch gekennzeichnet, dass** die vom Mikrocontroller (µC) an den Prozessor (P) übermittelten Codes sowohl Informationen über die Bewegungsrichtung, als auch über die Bewegungsamplitude enthalten.

## Claims

1. A control device that can be used to designate and move an object on a screen, said device comprising a mobile operating part (5), a detection unit comprising four detection means (G₁ to G₄) leaning against said disk (5) in two opposite couples of locations situated on two perpendicular axes (OX, O'Y), and a processing circuit (10, A/N, µC) capable of measuring the strains exerted on said detection means (G₁ to G₄) by said operating disk (5) and which controls the orientation, direction and speed of displacement as a function of the amplitude of the strains detected by said detection means (G₁ to G₄),
**characterised in that** the operating part (5) is guided by a guiding means in order to be capable of moving in translation in all directions within a plane as a result of strains exerted parallel to said plane, and **characterised in that** said detection means and the detection circuit are designed to measure the strains exerted in said plane by said operating part (5) on said detection means (G₁ to G₄).

2. The control device according to claim 1,
**characterised in that** the detection means consists of strain gauges (G₁ to G₄).

3. The control device according to claim 2,
**characterised in that** said operating part is, within said plane, of circular shape inscribed within a square formed by four flexible blades (F₁ to F₄) each bearing a strain gauge (G₁ to G₄)..

4. The control device according to one of the preceding claims,
**characterised in that** it comprises a means, separate from said strain gauges (G₁ to G₄) enabling the detection of a strain exerted, perpendicularly to said plane, on said operating part.

5. The device according to one of the preceding claims,
**characterised in that** it comprises a fixed structure in the form of a frame, of which one side has a wall with a circular central orifice and on which is slidably mounted a key connected to a disk contained inside said frame, via a brace (6), **in that** said disk bears against the four flexible blades parallel two by two (F₁ to F₄) defining a square in which said disk is inscribed, and **in that** each of said flexible blades (F₁ to F₄) is fixed to a strain gauge (G₁ to G₄).

6. The control device according to one of the preceding claims,
**characterised in that** said processing circuit comprises a conditioner which transforms the variations in the resistance of said strain gauges (G₁ to G₄) into analog electric signals which, after being converted into a digital signal by an analog-to-digital converter (A/N), are applied to a microcontroller (µC) coupled to the processor (P) managing the screen (E).

7. The control device according to claim 6,
**characterised in that** said microcontroller (µC) works out motion command codes from control laws and digital signals acquired from said strain gauges (G₁ to G₄).

8. The control device according to one of the preceding claims,
**characterised in that** said control laws used by the microcontroller (µC) can be dynamically modified by means of a protocol for communication with said processor (P).

9. The control device according to one of the preceding claims,
**characterised in that** the strain applied is translated into a series of direction codes of which the frequency of repetition is proportional to the component of the strain in the corresponding direction.

10. The device according to one of the claims 1 to 8,
**characterised in that** the codes transmitted to said processor (P) by said microcontroller (µC) contain information relating to both the direction and the amplitude of displacement.
